# EUROPÄISCHE PATENTANMELDUNG

(11) **EP 4 480 604 A1**
(43) Veröffentlichungstag der Anmeldung: **25.12.2024**
(21) Anmeldenummer: 24181908.5
(22) Anmeldetag: 13.06.2024
(51) Int. Cl.: B22F 1/065, B22F 9/04, B33Y 40/10, B33Y 70/00

(54) **VERFAHREN ZUR HERSTELLUNG VON METALLPULVER**

(30) Priorität: 15.06.2023 DE 102023115631
(71) Anmelder: Technische Universität Bergakademie Freiberg Körperschaft des öffentlichen Rechts, 09599 Freiberg (DE)
(72) Erfinder: Lieberwirth, Holger, 09599 Freiberg (DE); Krampitz, Thomas, 09599 Freiberg (DE); Jäckel, Hans-Georg, 09599 Freiberg (DE); Trebeck, Eric, 09599 Freiberg (DE)
(74) Vertreter: Pfenning, Meinig & Partner mbB

(57) **Zusammenfassung**

Bei dem Verfahren werden in einem ersten Verfahrensschritt i) Späne, die eine maximale Wandstärke von 500 µm oder Metallfolie, die eine maximale Wandstärke von 300 µm aufweist, bestehend aus dem jeweiligen Metall oder einer Metalllegierung von an ihren Oberflächen anhaftenden organischen Komponenten befreit. In einem zweiten Verfahrensschritt ii) wird eine rein mechanische Vorzerkleinerung mit rotierenden Werkzeugen mittels Scherbeanspruchung, bei der Partikel mit einer maximalen Partikelgröße 20.000 µm erhalten werden, in einem nachfolgenden dritten Verfahrensschritt ii) wird eine Nachzerkleinerung mittels Prallbeanspruchung zur weiteren Verkleinerung und Verrundung der Partikel durchgeführt, und in einem weiteren vierten Verfahrensschritt iv) wird eine mindestens einstufige Klassierung, in der Partikel mit einer Partikelgröße > 300 µm separiert und Partikel mit einer Partikelgröße < 300 µm einer Nutzung zugeführt werden, durchgeführt.

## Beschreibung

Die Erfindung betrifft die Herstellung von Metallpulvern im Partikelgrößenbereich 10 µm bis 300 µm für die additive Fertigung oder als Beschichtungsmaterial. Als Aufgabegut dienen Metallspäne oder -folien mit dünnen Wandstärken, die auch aus Abfallstoffströmen (spanende Bearbeitung, Läppen oder Abfälle wie Metallfolien) stammen können, wobei diese über duktile Werkstoffeigenschaften verfügen sollten (Metalle wie insbesondere Stahl, Kupfer, Aluminium und deren Legierungen sowie weitere). Die Herstellung erfolgt über ein Verfahren mit ausschließlich mechanischer Aufbereitungstechnik, mit speziell angepasster Zerkleinerungstechnik, die über Zerkleinerung, Umformung und Verkugelung das entsprechende Pulver mit zumindest weitestgehend sphärischer Außenkontur erzeugt.

Bei der additiven Fertigung metallischer Strukturen werden komplexe dreidimensionale Objekte aus möglichst dünnen horizontalen Schichten aufgebaut.

Ein limitierender Faktor für die Schichtdicke ist die Partikelgröße der dafür eingesetzten Metallpulver. Die additive Fertigung kennt viele Verfahren, wobei die am häufigsten eingesetzten die folgenden sind: Direct Metal Laser Sintering (DMLS) bzw. Selective Laser Melting (SLM), Metall Binder Jetting, Electron Beam Melting (EBM), Laser beam meltig (LBM), Metallextrusion oder der Metall-Pulver-Auftrag (MPA). Dabei werden jeweils angepasste Eigenschaften der Metallpulver benötigt. Es kommen Aluminium-, Kobalt-Chromlegierungen, Kupferlegierungen, Gold- und Stahllegierungen sowie Titanlegierungen zum Einsatz. Bei vielen 3D-Druckverfahren werden die Schichten im so genannten "3D-Drucker" zusammengefügt und das nicht gebundene Gut wird später abgetragen.

Zu den grundlegenden Eigenschaften der Metallpulver zählen die Partikelgrößenverteilung mit Gehalt an Fein- und Grobgut sowie die Partikelform. Hinzu kommen verfahrenstechnische Eigenschaften wie Schüttdichte und Fließfähigkeit.

Die Vielfalt von Partikelformen reicht von nadelförmig, dendritisch, unregelmäßig spratzig bis sphärisch. Für das Drucken werden überwiegend gleichbleibende regelmäßig geformte Partikel benötigt, wobei sphärische Formen wie eine fast perfekte Kugelform zu den besten Ergebnissen führen. Im Rahmen der Partikelgrößenverteilung werden die Größe der Partikel und deren Verteilung im Kollektiv beschrieben. Zur Quantifizierung der Partikelgröße wird häufig der statische Durchmesser nach Feret- oder der Äquivalentdurchmesser herangezogen. Größe und Verteilung beeinflussen maßgeblich die Schichtdicke bei der additiven Fertigung und somit auch die Genauigkeit, Oberflächengüte und Porosität des gefertigten Bauteils. Die Art der Verteilung, also linksschief, rechtsschief, oder normalverteilt nimmt ebenfalls Einfluss auf die Oberflächengüte eines Bauteils. Eine Verteilung mit einem größeren Anteil an groben Partikeln wirkt sich unter anderem negativ auf die Oberflächengüte aus. Neben der Art der Verteilung muss zusätzlich die Breite der Verteilung der Größe der einzelnen Partikel beachtet werden. Eine enge Partikelgrößenverteilung mit überwiegend feinen kleinen Partikeln kann zu Agglomerationen führen und damit die Porosität eines Bauteils erhöhen. Eine breite Verteilung mit vorwiegend groben größeren Partikeln neigt eher zum Entmischen. Je nach Messverfahren für die Charakterisierung der Partikelgröße weicht das Ergebnis vom realen Wert ab. Für die Metallpulver werden bildgebende Verfahren mit optischer Vermessung der Partikelabmessungen, wie auch bei der Erfindung mittels Laserstrahlverfahren, Zählung von Feldstörungen oder mittelbare Verfahren wie Mikroskopie oder Elektronenmikroskopie eingesetzt (Schatt, W., Wieters, K-P. und Kieback, B. Pulvermetallurgie-Technologien und Werkstoffe. Berlin : Springer-Verlag, 2007) Die Fließfähigkeit nach DIN ISO 4490 ist ein Maß für den Aufwand zum freien Fließen. Diese wird durch die Parameter Partikelgröße, Partikelform, Oberflächenbeschaffenheit, chemische Zusammensetzung sowie die Partikelgrößenverteilung beeinflusst. Zusätzlich spielen auch Wechselwirkungen zwischen den Partikeln eine Rolle. Bei additiven Prozessen wird vorrangig eine hohe Fließfähigkeit benötigt, um eine gleichmäßige und flächige Verteilung des Pulvers bei der Ausbildung von Pulverbetten zu gewährleisten. Die Schüttdichte nach DIN ISO 3923 wird durch die Eigenschaften wie Form, Größe und Verteilung der Partikel beeinflusst. Für die additive Fertigung ist die Schüttdichte relevant, da sie direkt die Dichte des Bauteils beeinflusst.

Metallpulver für additive Anwendungen werden derzeit über sehr verschiedene Verfahren hergestellt, die in Verfahren mit und ohne Phasenumwandlung eingeteilt werden. Die Verfahren ohne Phasenwandlung beziehen sich auf die mechanische Zerkleinerung, wie beispielsweise in Kugelmühlen. Zu den Verfahren mit Phasenumwandlung gehören die Wasserverdüsung, Gasverdüsung, Plasmaverdüsung, Zentrifugalverdüsung, Hydride-Dehydride-Verfahren, Reduktionsverfahren und Elektrolyseverfahren. Der Vorteil der Verfahren mit Phasenwandlung liegt in der exakten Einstellung der chemischen Zusammensetzung der Metalllegierungen sowie der Verarbeitungseigenschaften für die additive Fertigung.

Die Rohstoffe für die Herstellung geeigneter Pulver stammen bisher weitgehend aus metallurgischen Prozessen, die sehr energieaufwendig gewonnen und anschließend mit Phasenumwandlung nochmals sehr energieintensiv verarbeitet werden und letztlich zu den hohen Herstellungskosten der Pulver beitragen. Kostengünstigere mechanische Aufbereitungsprozesse ohne Phasenumwandlung sind nur für oxidische Werkstoffe oder Seltene-Erden-Legierungen bekannt. Auch Kryogenanwendungen führten bisher nicht immer zu den erwünschten Ergebnissen, insbesondere bei duktilen Werkstoffen wie Kupfer, Aluminium oder Stahl.

Werkstoffe mit weitgehend duktilem Stoffverhalten, wie Kupfer oder Stähle lassen sich über eine Kryogen-Versprödung mit flüssigem Stickstoff ebenfalls wie spröde Werkstoffe verarbeiten. Die Kryogenzerkleinerung ist aber sehr energieaufwändig.

Metallurgisch gaszerstäubte oder synthetisch hergestellte Pulver sind aufgrund ihrer sphärischen Morphologie und kontrollierbaren Partikelgrößenverteilung das gängigste Ausgangsmaterial für moderne additive Metallfertigungstechnologien. Die Herstellung von Pulvern erfordert jedoch einen erheblichen Ressourcenverbrauch, z.B. Energie, Chemikalien, Inertgas oder flüssigen Stickstoff, was zu hohen Kosten führt. Es besteht also ein starkes Bedürfnis die wachsende Nachfrage nach alternativen und nachhaltigen Rohstoffen für die Pulvermetallurgie oder additive Fertigung zu befriedigen und insbesondere die Kosten für die Herstellung geeigneter Metallpulver zu reduzieren.

Bei den bekannten Prozessen zur Pulverherstellung sind metallurgische Vorprodukte erforderlich.

Die mechanische Zerkleinerung mit Kugel- oder Planetenmühlen oder ähnlicher Beanspruchung (Druck-Scher-Beanspruchung) ist bisher ausschließlich für sprödbrechende Werkstoffen wie oxidischen Pulvern oder Seltene-Erden-Legierungen möglich. Insbesondere die zur Verfügungsstellung von Pulvern mit gleichmäßiger Partikelgrößenverteilung und geeigneter Außenkontur bereiten große Probleme

Es ist daher Aufgabe der Erfindung, Möglichkeiten für die kostengünstige Herstellung von Metallpulvern, insbesondere Pulvern, die aus bzw. im Wesentlichen mit Eisen, Kupfer oder Aluminium gebildet und für einen Einsatz in der additiven Fertigung auch einer pulverbettbasierten Fertigung geeignet sind. Insbesondere sollt eine thermische Beeinflussung weitestgehend vermieden und keine Phasenumwandlung erfolgen.

Erfindungsgemäß wird diese Aufgabe mit einem Verfahren mit den Merkmalen des Anspruchs 1 gelöst. Vorteilhafte Ausgestaltungen und Weiterbildungen der Erfindung können mit in abhängigen Ansprüchen bezeichneten Merkmalen realisiert werden.

Mit dem Verfahren sollen Metallpulver mit einer Partikelgröße < 300 µm für die additive Fertigung hergestellt werden.

Dazu werden bei einem ersten Verfahrensschritt i) Späne, die eine maximale Wandstärke von 500 µm oder Metallfolie, beispielsweise eine Kupferfolie, die eine maximale Wandstärke von 300 µm, bevorzugt mit einer Wandstärke im Bereich 10 µm bis 50 µm aufweisen, bestehend aus dem jeweiligen Metall oder einer Metalllegierung von an ihren Oberflächen anhaftenden organischen Komponenten befreit. Dies kann beispielsweise mit Hilfe von Aceton, einem Alkohol oder anderen Lösungsmitteln erreicht werden. Metallfolien sollten eine minimale Wandstärke von 2 µm aufweisen.

In einem zweiten sich daran anschließenden Verfahrensschritt ii) wird eine rein mechanische Vorzerkleinerung mit rotierenden Werkzeugen mittels Scherbeanspruchung, bei der Partikel mit einer Partikelgröße < ...20.000 µm erhalten werden, durchgeführt.

In einem dem zweiten Verfahrensschritt ii) nachfolgenden dritten Verfahrensschritt ii) wird eine Nachzerkleinerung mittels kombinierter Schlag-Prallbeanspruchung z.B. mit Mahlbahn bzw. Rost mit Öffnungsweite von 1 mm bis 3 mm (meist 2 mm) zur weiteren Verkleinerung auf < 2000 µm und Verrundung der Partikel durchgeführt. Damit soll auch eine zumindest annähernd sphärische Außenkontur der einzelnen Partikel erreicht werden.

In einem weiteren vierten Verfahrensschritt iv), der sich an den dritten Verfahrensschritt iii) anschließt, wird eine mindestens einstufige Klassierung durchgeführt, bei der Partikel mit einer Partikelgröße > 300 µm separiert und Partikel mit einer Partikelgröße < 300 µm einer Nutzung zugeführt werden. Es kann selbstverständlich auch eine mehrstufige Klassierung durchgeführt werden, bei der Partikelgrößenfraktionen mit unterschiedlichen jeweils maximalen Partikelgrößen in einer jeweiligen Fraktion erhalten und bei jeweils geeigneter maximaler Partikelgröße unterschiedlichen Einsatzerfordernissen als Produkte zur Verfügung gestellt werden.

Eine Klassierung kann durch ein- oder auch mehrfache/mehrstufige Siebung auch unter dem Einsatz unterschiedlicher Maschenweiten der jeweils eingesetzten Siebe durchgeführt werden.

So können im vierten Verfahrensschritt separierte Partikel mit einer Partikelgröße > 300 µm entsprechend ihrer Partikelgröße entweder dem zweiten Verfahrensschritt ii) oder dem dritten Verfahrensschritt iii) rückgeführt werden.

Der zweite Verfahrensschritt ii) kann mit mindestens einer bevorzugt mit mehreren Wellen versehenen Axialspalt-Schere durchgeführt werden. Es kann beispielsweise eine Axialspalt-Zweiwellenrotorschere mit Werkzeuggeometrien < 40 mm und minimalen Spaltabständen zwischen den Werkzeugen oder eine Einwellen-Radialspaltrotorschere mit Rost < 10 mm eingesetzt werden.

Beim dritten Verfahrensschritt iii) sollte eine Schlag-Prallbearbeitung mit einer Beanspruchungsgeschwindigkeit > 40 m/s bis 200 m/s durchgeführt werden. Für die Durchführung des dritten Verfahrensschritts iii) kann eine Prallbearbeitung mit einem Schlagrotor, einem Schlagnasenrotor, einer Stiftmühle, einem Turborotor, einer Pulverisette genutzt werden. So kann ein Schlagrotor mit 1 mm bis 2 mm Rostweite eingesetzt und auf die einzelnen Partikel wirkenden Prallgeschwindigkeiten im Bereich 40 m/s bis 60 m/s) damit erreicht werden.

Bei Bedarf oder nicht ausreichender Zerkleinerung kann der dritte Verfahrensschritt wiederholt und die Rostöffnungsweite schrittweise von 2000 µm auf bis zu 125 µm reduziert werden.

Zumindest der zweite Verfahrensschritt ii) und der dritte Verfahrensschritt iii) sollten in einer sauerstofffreien Atmosphäre durchgeführt werden, wobei auch eine inerte Gasatmosphäre dafür genutzt werden kann, die beispielsweise mit Stickstoff oder einem Edelgas gebildet ist.

Des Weiteren sollte bei dem zweiten und dritten Verfahrensschritt eine Temperatur < 100 °C eingehalten werden, um eine unnötige thermische Beeinflussung des erhaltenen Pulvers zu vermeiden. Dazu kann beispielsweise bei Bedarf ein geeignetes entsprechend temperiertes Gas zugeführt werden.

Die Herstellung geeigneter Metallpulver für die additive Fertigung kann mit der Erfindung über ausschließlich mechanische Aufbereitungsprozesse ohne Phasenwandlung und starker Kühlung auch für duktile Metalle erreicht werden.

Es können als Ausgangsmaterialien Reststoffe oder Produktionsabfälle, insbesondere Metallfolien und dünnwandige Späne, wobei letztere beispielsweise aus spanender Bearbeitung stammen können, eingesetzt werden. Bei Metallfolien können diese auch als Halbzeuge aus der Neufertigung genutzt werden. Da die Herstellung der Metallfolien aber deutlich kostengünstiger als eine Pulverherstellung mittels Phasenwechsel ist, kann so trotzdem der Kostenaspekt bei der Pulverherstellung beachtet werden.

Es können auch für die additive Fertigung geeignete Metallpulver mit Partikelgrößen 5 µm bis 300 µm zur Verfügung gestellt werden, wobei verschiedene enge Klassen für die jeweiligen Verarbeitungsverfahren hergestellt werden können. Dies kann beispielsweise Partikelgrößenfraktionen im Bereich 5 µm bis 35 µm, 10 µm bis 50 µm, 35 µm bis 80 µm, 50 µm bis 100 µm oder 2 µm bis 200 µm betreffen.

So können beispielsweise Kupferpulver mit Partikelgrößen 15 µm bis 38 µm mit 5 % < 15 µm und 10 % > 38 µm oder 25 µm bis 80 µm für Beschichtungsverfahren zur Verfügung gestellt werden.

Es können Partikel des Pulvers in sphärischer Kugelform bzw. Verkugelung mit dem Verfahren erhalten werden.

So hergestellte Pulver erreichen Kompaktierungsgrade (K > 90 %), wobei diese mit entsprechenden Dichteunterschiedbestimmungen bestimmt werden können.

Oxydische Oberflächenschichten (Patina) können mitverarbeitet werden und sich im Pulverprodukt wiederfinden lassen. Es ist also keine vorherige Entfernung von Oxidschichten auf dem Ausgangsmaterial für die Pulverherstellung erforderlich.

Als Ausgangsmaterial kann man auch eine entsprechende Metalllegierung einsetzen, die dann als solche weiter verarbeitet werden kann.

Die Erfindung kann als adaptiver Herstellungsprozess über mehrstufige Zerkleinerung (Mahlkreislauf) mit Klassierung und Sichtung betrachtet werden.

Im zweiten Verfahrensschritt ii) erfolgt eine Vorzerkleinerung über scherende Beanspruchung mit minimalem Spalt zwischen den beanspruchenden Werkzeugen, beispielsweise mit einer Zweiwellen-Axialspalt-Rotorschere.

Nach der Klassifizierung können Partikelgrößenfraktionen des hergestellten Pulvers < 300 µm direkt für einen Fertigungsprozess eingesetzt werden. Partikelgrößenfraktionen mit Partikeln > 300 µm können unterschiedlich weiter behandelt oder zu einer Einschmelzung zurückgeführt werden.

So können Partikel mit Partikelgrößen > 300 µm bis 1000 µm zurück in das Verfahren in den zweiten Verfahrensschritt ii) geführt werden und das Verfahren insoweit erneut durchlaufen.

Im vierten Verfahrensschritt iv) separierte Partikel mit Partikelgrößen im Bereich > 300 µm bis 1000 µm können in die dritten Verfahrensschritt iii) zurückgeführt werden und dabei mit hoher Beanspruchungsgeschwindigkeit > 40 m/s bis 200 m/s und Rostweiten bis minimal 300 µm erneut bearbeitet werden. Eine mehrmalige Aufgabe ist möglich.

Partikel mit Partikelgrößen im Bereich 300 µm bis 500 µm können zur Feinzerkleinerung in den dritten Verfahrensschritt iii) rückgeführt und dabei mit bis 200 m/s Beanspruchungsgeschwindigkeit bearbeitet und mit einer Rostweite von 125 µm bis 500 µm und dabei beispielsweise mit einer Stiftmühle, Turborotor oder Pulverisette weiter zerkleinert und verrundet werden.

Es ist eine Einstellung der Partikelgrößenverteilung unterschiedlicher Partikelgrößenfraktionen durch Absiebung und Sichtung möglich.

Prinzipiell könnte auch eine kryogene Vermahlung durchgeführt werden. Diese ist aber unter dem energetischen Aspekt nicht zu bevorzugen.

Wie bereits zum Ausdruck gebracht, stellt die Erfindung einen mehrstufigen Prozess dar, bei dem mechanische Aufbereitungsverfahren für die Metallpulverherstellung genutzt werden. Einfach ausgedrückt, besteht der Prozess aus einem Mahlkreislauf mit Zerkleinerung und Klassierung bzw. Sichtung. Bei der Zerkleinerung des Ausgangsmaterials Späne oder Folie wirkt eine komplexe Schlag-Prall-Beanspruchung in Prallmühlen.

Aus dünnwandigen Kabeln, Drähten oder Spänen mit Wandstärken < 300 µm als Ausgangsmaterial können hochwertige Metallpulver mit Partikelgrößen < 100 µm erhalten werden. Flächige Metallfolien (teils aufgewickelte Bänder) Wandtsärke < 100 µm können zu Metallpulver, deren Partikel Partikelgrößen < 100 µm liegen, verarbeitet werden.

Es können Pulver vordefinierter Legierungen (Z.B. Cu-Zn-Legierung) hergestellt werden.

Es kann mit der erfindungsgemäßen Art der Herstellung eine mit Energieeinsparung erreicht werden, die um einen Faktor 10 im Vergleich zu den metallurgischen Verfahren besser ausfällt.
- Eine Verarbeitung von Metalllegierungen, die über metallurgische Prozesse zu aufwendig oder technisch gar nicht herstellbar wären (Aluminium-Magnesium-Legierung, spezielle Stahllegierungen wie V2A) ist möglich.
- Es können Späne bzw. Folien aus den Legierungen eingesetzt oder Späne bzw. Folien aus jeweils einem Metall eingesetzt werden, die dann im fertigen Pulver als Pulvergemisch enthalten sind.

Die Erfindung füllt die technologische Lücke der Herstellung von Metall-pulver aus Metallen mit weitgehend duktilen Werkstoffeigenschaften, wie insbesondere Stahl, Kupfer oder Aluminium und deren Legierungen, wobei die geforderten und einstellbaren Partikelgrößenverteilungen der Partikelgrößen < 300 µm, insbesondere < 100 µm über ein rein mechanisches Aufbereitungsverfahren aus dünnwandigen Metallspänen - oder -folien hergestellt werden. Diese sind für den Einsatz in der additiven Fertigung, für Oberflächenbeschichtung oder diverse Zuschlagstoffe mit definierter Qualität vorgesehen. Das Aufbereitungsverfahren umfasst dabei die Feinstzerkleinerung sowie Abtrennung störender Produktverunreinigungen zur Erzeugung verwertbarer Metallpulver. Als Ausgangsrohstoffe können Produktionsabfälle oder andere Abfallquellen bzw. Metallkonzentrate dienen. Die Späne oder Folien sind über ein sehr dünnes und flächiges Materialband mit Wandstärken < 300 µm, insbesondere < 100 µm definiert. Die stoffliche Zusammensetzung der Metallpulver ergibt sich aus der werkstofflichen Zusammensetzung des Aufgabegutes. Der Nachteil besteht in der Abhängigkeit und Lieferbarkeit von Metallfolien bzw. der jeweiligen werkstofflichen Zusammensetzung und damit fehlenden Anpassungsfähigkeit der Legierungszusammensetzung. Der Vorteil ist, dass handelsübliche und damit wirtschaftliche Metalllegierungen verarbeitet werden können.

Nachfolgend soll die Erfindung anhand eines Beispiels näher erläutert werden.

Dabei wurde als Ausgangswerkstoff eine Kupferfolie mit einer Wandstärke von 50 µm eingesetzt, die einer Vorzerkleinerung mit einer ZweiwellenRotorschere, deren minimale Spaltbreite kleiner 0,2 mm betrug, unterzogen.

Die Nachzerkleinerung erfolgte mit einem Schlagnasenrotor, bei der das vorzerkleinerte Kupfer mit einer Beanspruchungsgeschwindigkeit von 41 m/s beaufschlagt und zuerst mit einer Rostweite von 3,5 mm eine Vorklassierung durchgeführt wurde. Im Anschluss daran wurde mit dem Schlagnasenrotor eine Feinzerkleinerung unter Nutzung einer Rostweite von 2 mm, dann eine Feinstzerkleinerung mit Rostweite von 1 mm und anschließend einer Rostweite von 0,5 mm bei Beibehaltung der Beanspruchungsgeschwindigkeit von 41 m/s durchgeführt.

Nach der Feinstzerkleinerung erfolgte eine Siebung, bei der erhaltene Partikel mit Partikelgröße kleiner 100 µm abgeführt und Partikel mit Partikelgröße größer 100 µm in die Feinstzerkleinerung rückgeführt werden.

## Patentansprüche

1. Verfahren zur Herstellung von Metallpulver mit einer Partikelgröße < 300 µm für die additive Fertigung, bei dem in einem ersten Verfahrensschritt i) Späne, die eine maximale Wandstärke von 500 µm oder Metallfolie, die eine maximale Wandstärke von 300 µm aufweist, bestehend aus dem jeweiligen Metall oder einer Metalllegierung von an ihren Oberflächen anhaftenden organischen Komponenten befreit werden,
in einem zweiten Verfahrensschritt ii) eine rein mechanische Vorzerkleinerung mit rotierenden Werkzeugen mittels Scherbeanspruchung, bei der Partikel mit einer maximalen Partikelgröße 20.000 µm erhalten werden,
in einem nachfolgenden dritten Verfahrensschritt ii) eine Nachzerkleinerung mittels Prallbeanspruchung zur weiteren Verkleinerung und Verrundung der Partikel durchgeführt wird, und
in einem weiteren vierten Verfahrensschritt iv) eine mindestens einstufige Klassierung in der Partikel mit einer Partikelgröße > 300 µm separiert und Partikel mit einer Partikelgröße < 300 µm einer Nutzung zugeführt werden

2. Verfahren nach Anspruch 1, **dadurch gekennzeichnet, dass** im vierten Verfahrensschritt separierte Partikel mit einer Partikelgröße > 300 µm entsprechend ihrer Partikelgröße entweder dem zweiten Verfahrensschritt ii) oder dem dritten Verfahrensschritt iii) rückgeführt werden.

3. Verfahren nach einem der vorhergehenden Ansprüche, **dadurch gekennzeichnet, dass** Partikel < 300 µm in einem weiteren Verfahrensschritt zwischen Verfahrensschritt ii) und iii) erneut zerkleinert werden, wobei eine Rostweite bis zu 125 µm eingesetzt und die Beanspruchungsgeschwindigkeit zwischen 40 m/s und 200 m/s angepasst werden

4. Verfahren nach dem vorhergehenden Anspruch, **dadurch gekennzeichnet, dass** die Rostweite zwischen 2000 µm und 125 µm stufenweise reduziert wird.

5. Verfahren nach einem der vorhergehenden Ansprüche, **dadurch gekennzeichnet, dass** der zweite Verfahrensschritt ii) mit mindestens einer Axialspalt- oder einer Radialspaltrotor-Schere mit minimaler Spaltweite, durchgeführt wird.

6. Verfahren nach einem der vorhergehenden Ansprüche, **dadurch gekennzeichnet, dass** der dritte Verfahrensschritt iii) eine Prallbearbeitung mit einer Beanspruchungsgeschwindigkeit > 40 m/s durchgeführt wird.

7. Verfahren nach einem der vorhergehenden Ansprüche, **dadurch gekennzeichnet, dass** der dritte Verfahrensschritt iii) eine Schlag-Prallbearbeitung mit einem Schlagrotor, einem Schlagnasenrotor, einer Stiftmühle, einem Turborotor, einer Pulverisette durchgeführt wird.

8. Verfahren nach einem der vorhergehenden Ansprüche, **dadurch gekennzeichnet, dass** zumindest der zweite Verfahrensschritt ii) und der dritte Verfahrensschritt iii) in einer sauerstofffreien Atmosphäre und/oder bei einer Temperatur < 100 °C durchgeführt wird.

9. Verfahren nach einem der vorhergehenden Ansprüche, **dadurch gekennzeichnet, dass** die Klassierung im vierten Verfahrensschritt iv) mittels mehrstufiger Siebung durchgeführt wird.
